# EUROPEAN PATENT APPLICATION

(11) **EP 1 220 171 A1**
(43) Date of publication of application: **03.07.2002**
(21) Application number: 01129263.8
(22) Date of filing: 12.12.2001
(51) Int. Cl.: G07F 7/08, G07F 19/00

(54) **Settlement processing method and settlement processing**

(30) Priority: 28.12.2000 JP 2000401536
(71) Applicant: NTT DoCoMo, Inc., Tokyo 100-6150 (JP)
(72) Inventor: Sasaki, Shuji, Saitama-shi, Saitama 330-0834 (JP); Yoshida, Yuuji, Yokohama-shi, Kanagawa 235-0045 (JP); Kuroda, Yukikazu, Tokyo 177-0045 (JP)
(74) Representative: HOFFMANN - EITLE

(57) **Abstract**

A settlement processing method and settlement processing system which provide an electronic settlement service by transfer of information through a communications network in an area outside a ground network where ground waves do not reach and where installation of a telephone line would be difficult. In an area which ground waves do not reach such as a mountain lodge, a satellite packet communications mobile unit able to transfer information with the outside at a communications speed of 9600 bps is connected with a credit card reader terminal by an RS-232C specification connection terminal through a PC card. The card reader terminal communicates with the mobile packet communications network through the satellite packet communications mobile unit and packet communications satellite and establishes connection with the card settlement center through a dedicated line. Due to this, the card reader terminal is able to transfer information with the card settlement center through the satellite and mobile communications network and settlement information required for settlement of a sales transaction transmitted after credit verification is sent to the credit card company through the card settlement center.

## Description

### BACKGROUND OF THE INVENTION

### Field of the Invention

The present invention relates to a settlement processing method and settlement processing system for electronically processing settlements by the transfer of information relating to processing of settlements of sales transactions through a communications network.

### Description of the Related Art

In card settlement services utilizing credit cards stores participating in the service electronically process settlements by the transfer of predetermined information with card companies through a communications network. At the present time, these are widespread and are utilized for various sales transactions. The communications network used in this case has mainly been wired fixed communications networks in the past. Recently, however, mobile communications networks have also begun to be used.

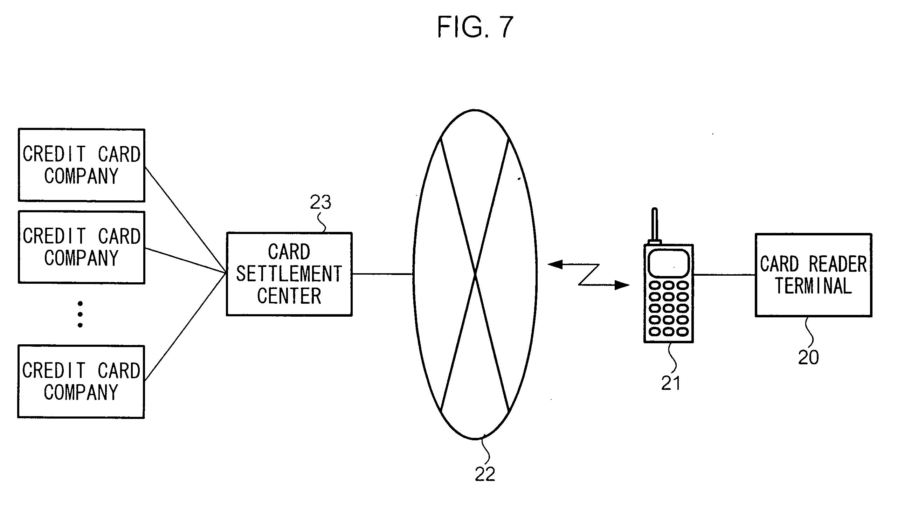

FIG. 7 is a view of the configuration of such a credit card settlement processing system using a mobile communications network. In the figure, a credit card reader terminal 20 reads information recorded in the credit card and is installed at a member store of the credit card company. A mobile unit 21 is a portable telephone or other communications terminal served by the mobile communications network 22. It is connected to the card reader terminal 20 in the member store and relays communications between the card reader terminal 20 and mobile communications network 22. The mobile communications network 22 serves the mobile unit 21 and relays communications between the mobile unit 21 and another mobile unit or a communications terminal connected to the mobile communications network 22. A computer system of a card settlement center 23 is connected with the mobile communications network 22 by a dedicated line. The card settlement center 23 sends the information necessary for the credit card settlement received from the card reader terminal through the dedicated line to the credit card company handling the credit card settlement.

In this configuration, if an employee of a member store reads the credit card by the card reader terminal 20 and performs a predetermined operation for starting the communications, a request for connection with the card settlement center 23 is sent from the mobile unit 21 to the mobile communications network 22. The processing for establishing the connection relating to the connection request is then performed. As a result, the card reader terminal 20 connected to the mobile unit 21 is connected to the card settlement center 23 through the mobile communications network 22. Due to this, the card reader terminal 20 transmits the information necessary for the settlement (information of the read credit card) through the card settlement center 23 to the concerned credit card company, whereby the settlement of the credit card is processed electronically.

Summarizing the problems to be solved by the invention, in such a card settlement processing system including a mobile communications network, since the communications terminal of a member store is a mobile unit and it should be served by a ground mobile communications network, it has to be located in an area reached by ground waves (service area of ground mobile communications network). Therefore, in this card settlement processing system, it is not possible to provide a card settlement service to an area where ground waves cannot reach such as in mountainous regions or on the sea or in the air. Further, in such an area, installation of a telephone line of a fixed communications network is also difficult. Therefore, a card settlement service for credit cards cannot be provided.

In practice, however, sales transactions are sometimes settled even in areas which such ground waves cannot reach. For example, charges for use of facilities or sales of items are settled in mountain lodges located in outlying places in mountainous regions or in stores in ocean liners during their voyages. For this type of settlement, since a card settlement service cannot be used, cash is normally used for directly processing the transaction between the customer and store employee. Therefore, the customer has to keep the necessary amount of cash on hand, while the mountain lodge or store has to prepare money for providing change in advance. Settlement involves complicated trouble in these cases. In particular, some mountain lodges located in outlying regions have to fly in the small change by helicopter. This involves tremendous cost and labor.

### SUMMARY OF THE INVENTION

An object of the present invention is to provide a settlement processing method and settlement processing system realizing an electronic settlement service by transfer of information through a ground network, eliminating the trouble in settlement, and improving convenience even in an area normally outside mobile communications networks, fixed communications networks, and other ground networks where ground waves cannot reach and where installation of a telephone line would be difficult such as in mountainous regions, on the sea, and in the air (for example, in mountain lodges, on ships, in airplanes).

To attain the above object, the present invention transmits information relating to settlement processing for a sales transaction through a satellite to a communications network and has the transmitted information received by a settlement unit for sales transactions connected to the communications network. Due to this, the settlement unit can obtain information relating to the settlement processing for a sales transaction performed outside the communications network and can process settlements based on that information.

According to a first aspect of the present invention, there is provided a settlement processing method comprising the steps of transferring from a transmitter information relating to settlement processing of a sales transaction; receiving and transmitting by a satellite the information transmitted from the transmitter; receiving by a communications network the information thus transmitted; and receiving the information through the network and processing the settlement of the sales transaction based on the received information by a settlement unit connected to the communications network.

According to a second aspect of the present invention, there is provided a settlement processing system comprising a transmitter for transmitting information relating to settlement processing of a sales transaction; a satellite for receiving and transmitting the information transmitted from the transmitter; a communications network for receiving information transmitted from the satellite; and a settlement unit connected to the communications network, receiving the information transmitted from the transmitter through the satellite and the communications network, and processing the settlement of the sales transaction based on the received information.

Preferably, the transmitter is provided with an input device for inputting information relating to settlement processing of the sales transaction and a satellite communications device having an interface able to transfer information with the input device and communicating with the satellite.

More preferably, the satellite communications device transfers information with the input device through the interface at a communications speed commensurate with the input device.

Still more preferably, the satellite communications device is a portable mobile unit for satellite communications.

Still more preferably, the transmitter starts a connection operation with the settlement unit through the satellite and the communications network upon the input of a predetermined instruction by an operator of the input device and transmits information relating to the settlement processing of the sales transaction by a transmitting operation by an operator performed after the input of the instruction.

Still more preferably, the settlement unit verifies the input device.

### BRIEF DESCRIPTION OF THE DRAWINGS

These and other objects and features of the present invention will become clearer from the following description of the preferred embodiments given with reference to the attached drawings, wherein:
FIG. 1 is a view of an example of the configuration of a credit card settlement processing system according to an embodiment of the present invention;
FIG. 2 is a view of a specific example of the configuration of a card reader terminal 1a in this credit card settlement processing system;
FIG. 3 is a sequence diagram showing the routine of a card settlement service according to this credit card settlement processing system;
FIG. 4 is a view of the processing routine in this credit card settlement service in the case where a satellite packet communications mobile unit 2 is not registered as a mobile unit of a legitimate subscriber;
FIG. 5 is a view of the processing routine in this credit card settlement service in the case where a card reader terminal 1a is not registered as a terminal of a legitimate member store;
FIG. 6 is a view of the system configuration in the case of application of this credit card settlement processing system to settlement processing by a debit card; and
FIG. 7 is a view of the configuration of a conventional credit card settlement processing system using a mobile communications network.

### DESCRIPTION OF THE PREFERRED EMBODIMENTS

Preferred embodiments of the present invention will be described in detail below while referring to the attached figures.

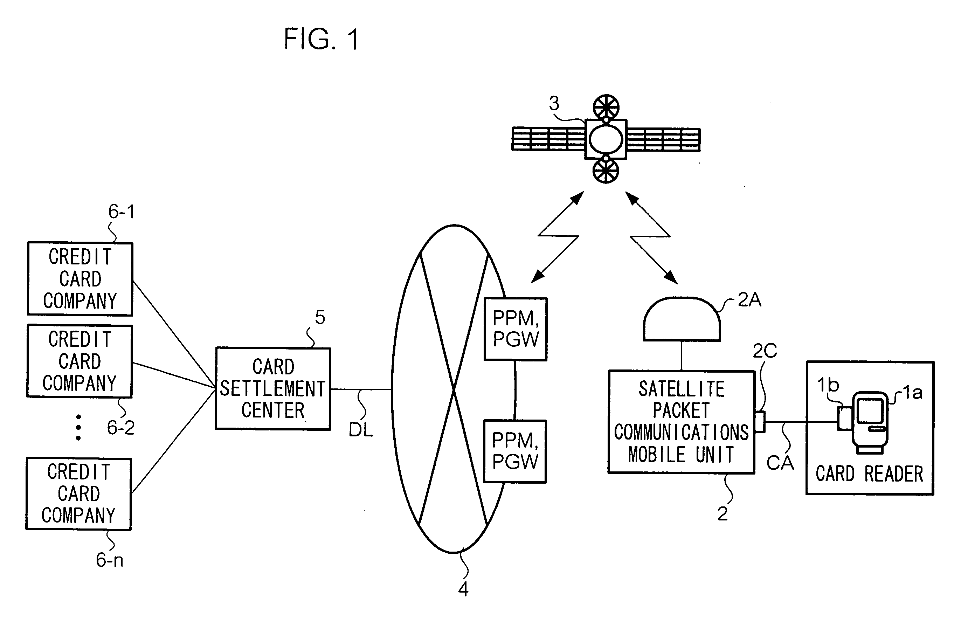

FIG. 1 is a view of an example of the configuration of a credit card settlement processing system according to an embodiment of the present invention.

In the figure, a card reader 1 transfers information relating to a credit card settlement with a credit card company. For example, it is comprised of a card reader terminal 1a and a PC card 1b. The card reader terminal 1a, like a generally used card reader terminal for credit cards, is designed to transfer information by packet communications at a communications speed of 9600 bps. A PC card 1b is inserted into the interface for the transfer of information.

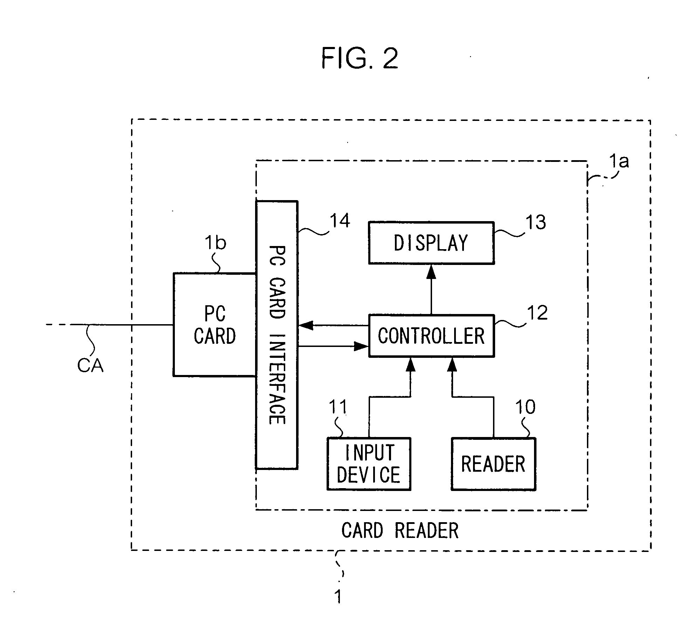

The specific configuration of the card reader terminal 1a is for example as shown the portion surrounded by the one-dot chain line in FIG. 2 and includes a reader 10, an input device 11, a controller 12, a display 13, and a PC card interface 14. The reader 10 is the portion where the operator (for example, an employee of a member store) swipes a credit card to read the information recorded on the credit card and supply it to the controller 12. The input device 11 is comprised of a device such as a keyboard or pointing device receiving the input information from the operator and supplies the input information to the controller 12. The controller 12 is configured by a central processing unit (CPU) for processing the information in the card reader terminal 1a and transferring information with the outside and a read only memory (ROM) or other nonvolatile memory and a random access memory (RAM) storing information in a rewritable manner or other semiconductor memory. It controls the display operation of the display 13 and transfers information through the PC card interface 14 based on the information supplied from the reader 10 and input device 11. The display 13 displays predetermined information such as the information input by the operator under the control of the controller 12. The PC card interface 14 has a PC card slot for connection with the outside. A PC card 1b is inserted into this PC card interface 14. The PC card 1b is an interface conversion card for connecting a PC card interface and an RS-232 specification interface and is inserted between the card reader terminal 1a and the RS-232 specification cable CA.

On the other hand, a satellite packet communications mobile unit 2 of FIG. 1 is served by a later explained mobile packet communications network 4 through a satellite. It has an antenna 2A able to transfer signals with a satellite and is provided with the function of a satellite portable telephone transferring information through packet communications through a satellite. This satellite package communications mobile unit 2 is provided with an RS-232C specification connection terminal 2C for transferring information by packet communications at a communications speed of 9600 bps. This connection terminal 2C is connected to the PC card 1b of the card reader 1 through the cable CA. That is, the satellite packet communications mobile unit 2 has an interface corresponding to the card reader 1 transferring information at the communications speed of the card reader 1 (card reader terminal 1a). It is connected through the interface with the card reader terminal 1a by a packet mode and functions as an information transferring means causing the card reader terminal 1a to engage in satellite packet communications.

The above card reader 1 and satellite packet communications mobile unit 2 are used in an area where ground waves do not reach and where installation of a telephone line would be difficult such as in mountainous regions, on the sea, or in the air. For example, the owner of a mountain lodge or the employee of a store on board an ocean liner during its voyage has the card reader 1 and satellite packet communications mobile unit 2 and uses the card reader 1 and satellite packet communications mobile unit 2 for settlement of sales transactions in the mountain lodge or on board the ship. Such locations of use normally are outside ground networks (fixed communications networks or mobile communications networks using ground stations), but can be serviced by the broader coverage area of satellite communications.

The packet communications satellite 3 in FIG. 1 also serves such locations of use. It communicates with the satellite packet communications mobile unit 2 and mobile packet communications network 4 and relays information in the form of packet signals transferred between the satellite packet communications mobile unit 2 and mobile packet communications network 4. The mobile packet communications network 4 is a ground network providing packet communications service to general portable telephones and other mobile units in the area reached by ground waves, but has a satellite packet processing module (SPPM) and satellite packet gateway module (PGW) and can also communicate with the satellite packet communications mobile unit 2 through the packet communications satellite 3.

Here, the SPPM and PGW are modules for processing for connection for satellite communications (explained later) and processing for relaying in the mobile packet communications network 4. They differ in the point of having functions specific to satellite communications as opposed to an ordinary packet processing module (PPM) and packet gateway module (PGW) installed for connection processing and relay processing of general mobile units. Satellite communications feature a longer transmission delay time of packets and a larger delay to be absorbed and adjusted compared with ordinary communications in a mobile packet communications network 4. Further, in satellite communications, the packet transmission speeds are asymmetrical. An SPPM and PGW have functions to absorb these differences (function of absorbing and adjusting delay and function of converting communications speed). Further, the mobile packet communications network 4 is provided with a mobile unit ID database in which the IDs of the mobile units legitimately subscribing to the communications service offered by the mobile packet communications network 4 are registered (not shown). The satellite packet communications mobile unit 2 in the figure is registered in advance in the mobile unit ID database as a legitimately subscribed mobile unit and is assigned a mobile unit ID.

The card settlement center 5 receives information of the credit card from the card reader terminal and is realized by a computer system. The computer system of the card settlement center 5 is connected to the mobile packet communications network 4 by a dedicated line DL and has a terminal ID database registering the IDs of the card reader terminals of the member stores legitimately participating in the credit card settlement service. The card reader terminal 1a in the figure is registered in advance in the terminal ID database as a card reader terminal of a legitimately participating member store and is assigned a terminal ID. Reference numerals 6-1, 6-2,..., 6-n are credit card companies. The computer systems relating to their use are connected with the computer system of the card settlement center 5, receive the settlement information necessary for credit card settlement through the card settlement center 5, and perform the predetermined settlement processing based on the received settlement information.

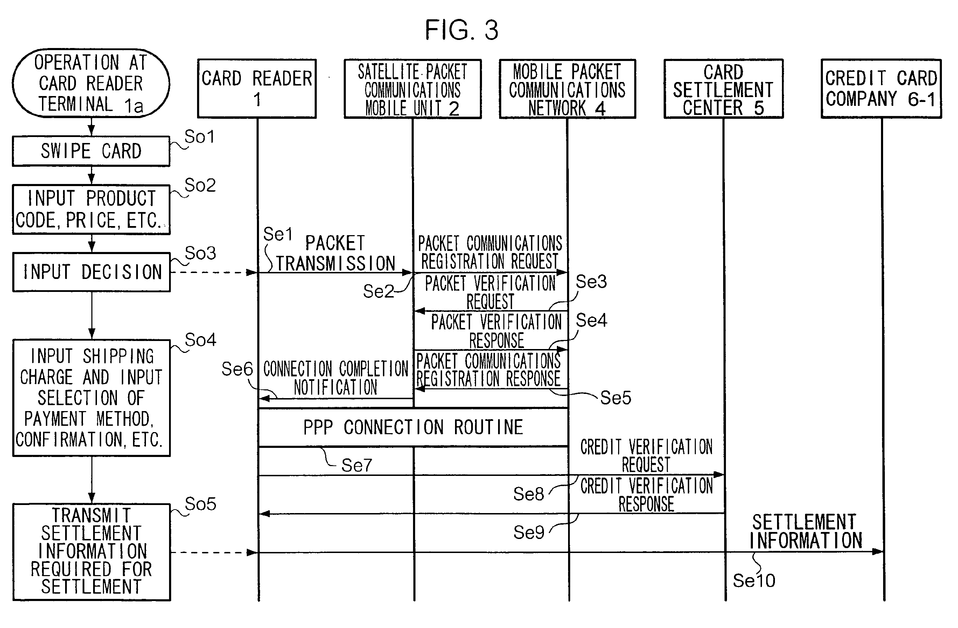

Next, the operation of the credit card settlement processing system according to this configuration will be explained. FIG. 3 is a sequence diagram of the routine of the card settlement service realized by the operation of this credit card settlement processing system. In this figure, the routine for the operation performed at the card reader terminal 1a at the time of settlement is shown at the left end. The processing routine for the card settlement service is shown along with this operation.

The card reader terminal 1a is operated by an owner of a mountain lodge or an employee of a store on board an ocean liner during a voyage who is requested by a customer to process a sales transaction by credit card. The operator requested to process the transaction by credit card swipes the credit card in the reader 10 of the card reader terminal 1a (step So1) and operates the input device to input the product code and price of the product involved in the sales transaction (step So2). Due to this, information recorded on the credit card of the user and information relating to the sales transaction are supplied to the controller 12 and fetched into the card reader terminal 1a.

Next, the operator performs a predetermined operation at the input device 11 to input an execution command and thereby input a decision (step So3). The input of a decision spoken of here is the input of an instruction to electronically start the settlement processing of the user using the information fetched into the card reader terminal 1a (start communications for settlement). When this decision is input, a packet seeking packet communications by the mobile packet communications network 4 is sent to the satellite packet communications mobile unit 2 from the card reader 1 (step Se1).

Here, the packet from the card reader 1 is sent in the form of a packet signal at a communications speed of 9600 bps by the controller 12 of the card reader terminal 1a. The PC card interface 14 of the card reader terminal 1a is, as explained above, connected through the PC card 1b and cable CA to the RS-232C specification connection terminal 2C of the satellite packet communications mobile unit 2 and can transfer information with the satellite packet communications mobile unit 2 at a communications speed of 9600 bps. Due to this, the satellite packet communications mobile unit 2 receives a packet transmission from the card reader 1 and requests registration of packet communications to the mobile packet communications network 4.

The request for registration of packet communications from the satellite packet communications mobile unit 2 is transmitted from the antenna 2A, received by the packet communications satellite 3, and transmitted to the mobile packet communications network 4. In the mobile packet communications network 4, the SPPM receives the request for registration of packet communications through a base station and starts verification of the transmitting mobile unit. That is, the SPPM receiving the packet communications registration request requests packet verification to the satellite packet communications mobile unit 2 through the packet communications satellite 3 (step Se3). The satellite packet communications mobile unit 2 receiving this packet verification request returns the mobile unit ID assigned to itself to respond to the packet verification request (step Se4). The SPPM receives this returned mobile unit ID and checks it against the mobile unit IDs registered in the mobile unit ID database. Now, since the satellite packet communications mobile unit 2 is registered in advance in the mobile unit ID database as a legitimately subscribing mobile unit and is recognized as a mobile unit of a legitimate subscriber by the returned mobile unit ID, the SPPM performs processing for line connection to the PGW and transmits a packet communications registration request to the satellite packet communications mobile unit 2 (step Se5).

When receiving the packet communications registration response from the SPPM, the satellite packet communications mobile unit 2 issues a notification of completion of connection to the card reader 1 (step Se6). Due to this, the card reader 1 becomes served by the mobile packet communications network 4 through the packet communications satellite 3 and the card reader terminal 1a can transfer information by satellite packet communications with the mobile packet communications network 4 through the PC card 1b, cable CA, satellite packet communications mobile unit 2, and packet communications satellite 3.

Next, the card reader 1 (card reader terminal 1a) executes a connection routine by a point to point protocol (PPP) to the card settlement center 5 with the mobile packet communications network 4 (step Se7). Due to this, a PPP connection is established between the reader 1 and card settlement center 5. As mentioned above, the card reader terminal 1a used in a mountain lodge can therefore transfer information with the card settlement center 5 in accordance with the transmission control protocol/Internet protocol (TCP/IP) through the satellite and ground mobile communications network.

In this state, the card reader terminal 1a transmits its own terminal ID and the card reader 1 requests credit verification to the card settlement center 5 (step Se8). The transmitted terminal ID is received by the card settlement center 5 through the packet communications satellite 3 and mobile packet communications network 4 and checked against the terminal IDs registered in the terminal ID database. Here, since the card reader terminal 1a is registered in advance in the terminal ID database as a card reader terminal of a member store legitimately participating in the credit card settlement service and is recognized as a legitimate card reader terminal by the transmitted terminal ID, the card settlement center 5 returns a credit verification response to the effect of recognizing the card reader terminal 1a as a legitimate card reader terminal and accepting the settlement information (step Se9).

In this way, processing is performed for packet communications registration, credit verification from the packet transmission at the time of input of the above decision at the card reader terminal 1a (step Se1 to Se9). This processing uses satellite packet communications, so requires a certain amount of time (while differing depending on the state of the communications network, normally a time of about 30 seconds is expected to be required). Using this time, at the card reader terminal 1a side, the operator operates the input device 11 and performs other input required for credit card settlement processing in parallel.

The "input operation" here means input of the shipping charge when sending a product relating to a sales transaction later, input for selection of the method of payment, and input of confirmation when confirming the information fetched by the card reader terminal 1a relating to the sales transaction with the user on the display 13 (step So4). Note that in the input for selection of the method of payment, an operation is performed for selecting the method of payment designated by the user from among a menu of payment methods including lump sum payment, instalment payment, payment within a specific period (so-called "bonus payment"), payment up to a certain limit (so-called "revolving payment").

After inputting confirmation, the operator performs an operation for transmitting the settlement information by inputting a predetermined execution command at the input device 11 (step So5). Due to this, the card reader terminal 1a transmits the information recorded at the credit card of the user, information relating to the object of the sales transaction, information on the shipping charge or method of payment, and other settlement information required for the settlement. Assuming that the credit card of the user was issued by the credit card company 6-1, this settlement information is transmitted from the card reader 1 in the form of a packet signal through the satellite packet communications mobile unit 2, packet communications satellite 3, and mobile packet communications network 4 to the card settlement center 5 and is routed through the card settlement center 5 and sent to the credit card company 6-1 (step Se10).

In this way, settlement information is transferred by satellite packet communications between the card reader terminal 1a and the concerned credit card company, and the settlement of the sales transaction with the user is electronically processed in the credit card company handling the credit card of the user. Due to this, the credit card settlement at a mountain lodge or in an ocean liner during a voyage in an area which the ground waves cannot reach and where installation of a telephone line would be difficult is completed and the card settlement service by the credit card settlement processing system is ended.

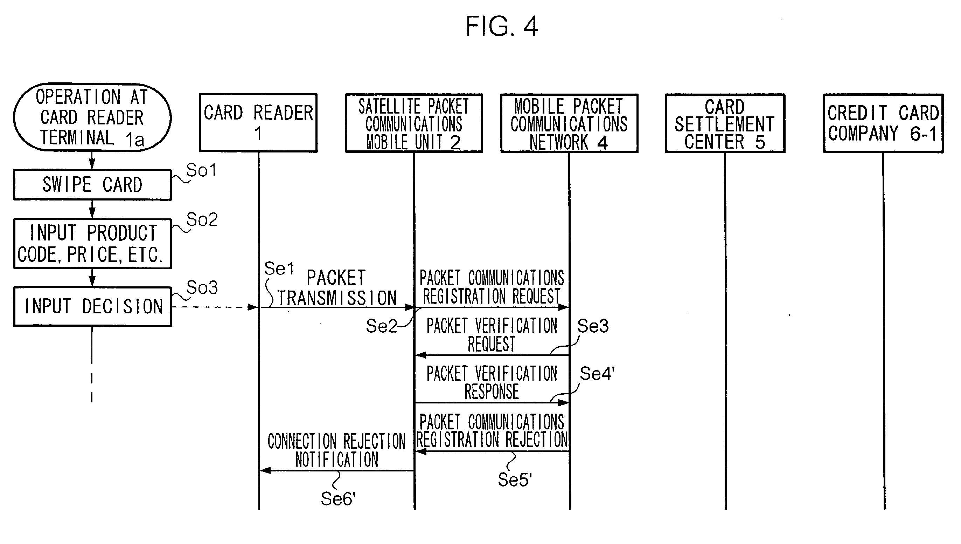

Note that in this credit card settlement processing system, when using a satellite packet communications mobile unit 2 not registered in the mobile unit ID database, the processing routine becomes that as shown in FIG. 4 and the card settlement service cannot be provided. That is, in this case, the processing up to the above packet verification request (steps So1 to So3 and steps Se1 to Se3) is performed, but in the packet verification response to the packet verification request (step Se4'), a mobile unit ID registered in the mobile unit ID database is not returned from the satellite packet communications mobile unit 2. Therefore, the mobile packet communications network 4 (SPPM) does not recognize the satellite packet communications mobile unit 2 in this case as a mobile unit of a legitimate subscriber and rejects the registration of packet communications (step Se5'). Due to this, the communications with the mobile packet communications network 4 is ended, a notification of rejection of connection is sent to the card reader 1 from the satellite packet communications mobile unit 2 (step Se6'), the operation of the credit card settlement processing system ends, and settlement processing is not performed.

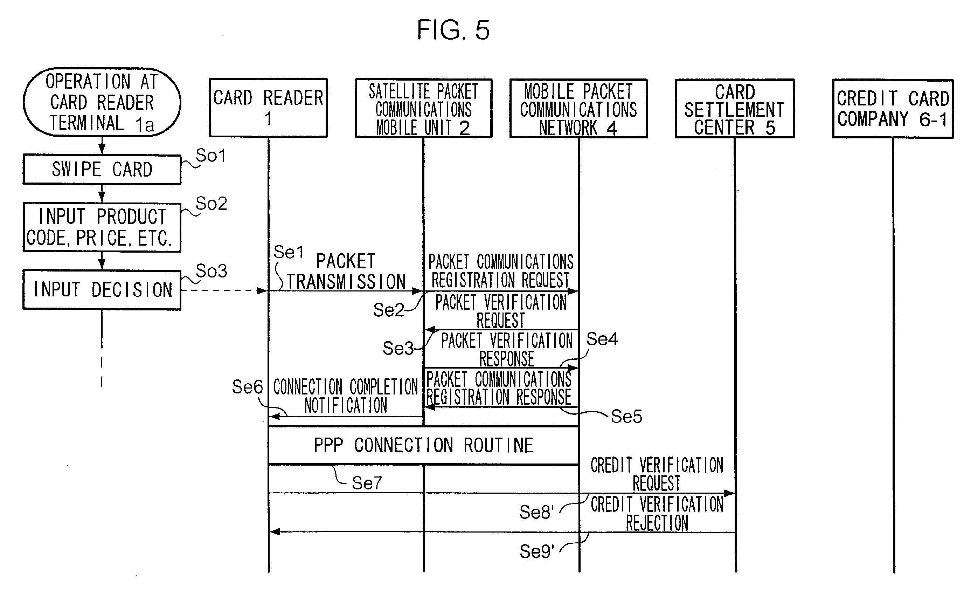

Further, it is also not possible to provide the card settlement service when using a card reader terminal 1a not registered at the terminal ID database. In this case, the processing routine becomes as shown in FIG. 5. The processing up to the above PPP connection routine (steps So1 to So3 and steps Se1 to Se7) is performed, but the terminal ID registered at the terminal ID database is not transmitted by a credit verification request from the card reader 1 (step Se8'). Therefore, the card settlement center 5 does not recognize the card reader terminal 1a in this case as a legitimate card reader terminal, rejects the credit verification (step Se9'), and does not accept the settlement information. Therefore, it is not possible to send settlement information from the card reade-r 1 to the credit card company and the settlement is not processed.

Above, an embodiment of the present invention was explained, but the present invention is not limited to the above embodiment. Next, modifications or applications of the above embodiment will be explained while giving specific examples.

### (1) Timing of Input of Decision

In the above embodiment, the decision was input at the time of swiping of the credit card and input of the product code, but the timing of the input of the decision may also be otherwise suitably set. The input of the decision in the above embodiment is made when causing packet transmission from the card reader terminal 1a and starting communications processing, so is preferably performed at a suitable timing in accordance with the delay due to satellite communications or the amount or order of the required input information.

For example, when about 30 seconds are required from packet transmission to verification response by the card settlement center 5 (when the connection processing time due to the use of satellite packet communications is about 30 seconds), the decision is input at the time when operation for input of information at the card reader terminal 1a requiring at least about 30 seconds is left. By doing this, it becomes possible to transmit settlement information immediately when finishing the remaining operation for input of information, so the operator can quickly finish the credit-card settlement and the customer is given improved convenience as well. That is, since a certain connection processing time is taken due to the use of a satellite, it is possible to use this connection processing time for a certain extent of the operation for input of information.

### (2) Card Reader Terminal and Satellite Packet Communications Mobile Unit

In the above embodiment, the card reader terminal 1a and the RS-232C specification connection terminal 2C of the satellite packet communications mobile unit 2 are connected through the PC card 1b and information is transferred between the two by packet communications at a communications speed of 9600 bps. Therefore, the card reader terminal 1a can also be configured using an existing card reader terminal used for credit cards. On the other hand, the satellite packet communications mobile unit 2 may also be configured by augmenting an existing satellite packet communications mobile unit or satellite portable telephone having an RS-232C connection terminal able to connect to a personal computer with the function of transfer of information with the outside at a communications speed of 9600 bps. Further, when the augmented function satellite packet communications mobile unit or satellite portable telephone is one having a universal serial bus (USB) port, the two may be connected by providing a USB port at the card reader terminal side. In short, as the satellite packet communications mobile unit, it is sufficient to use one having an interface compatible with the card reader.

### (3) Application to Debit Cards, Electronic Money, Etc.

The settlement processing system of the above embodiment covered settlement by credit cards, but it is also possible to cover settlement by debit cards, electronic money, instead of settlement by credit cards (or together with settlement by credit cards).

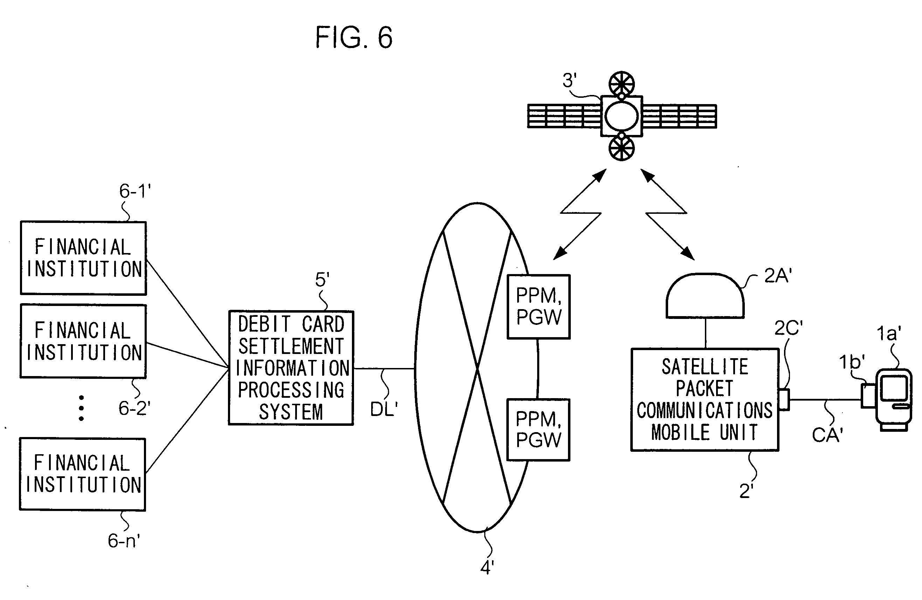

For example, a system covering settlement by a debit card may also be configured as shown in FIG. 6. In the figure, the reader terminal 1a= is for a debit card, reads information recorded on the debit card, and transmits the read information together with other information relating to the sales transaction in the form of a packet signal. The interface conversion device 1b' is based on the specifications of PC cards and is suitably provided in accordance with the type of the external connection interface of the reader terminal 1a= so as to connect the reader terminal 1a' and a satellite packet communications mobile unit 2' through a cable CA'. The satellite packet communications mobile unit 2' has an antenna 2A' able to transfer signals with a satellite and is provided with a function of transferring information by packet communications through a satellite in the same way as the above satellite packet communications mobile unit 2, but has a connection terminal 2C' commensurate with the type of information transfer of a debit card reader terminal (communications speed and interface specifications for example). Using the connection terminal 2C', the satellite packet communications mobile unit 2' is connected with the reader terminal 1a' by a packet mode through the cable CA' and interface conversion device 1b' and functions as an information transferring means for making the reader terminal 1a' engage in satellite packet communications in the same way as the satellite packet communications mobile unit 2 for the card reader terminal 1a in the above embodiment.

The packet communications satellite 3' can communicate with the satellite packet communications mobile unit 2'. It communicates with the satellite packet communications mobile unit 2' and mobile packet communications network 4' and relays information in the form of a packet signal to be transferred between the satellite packet communications mobile unit 2' and mobile packet communications network 4'. The mobile packet communications network 4' is a mobile communications network having an SPPM and PGW in the same way as the above mobile packet communications network 4 and can communicate with the satellite packet communications mobile unit 2'. A debit card settlement information processing system 5' is a computer system for processing for receiving settlement information sent from the reader terminals through the mobile packet communications network 4'. In the case of settlement by a debit card, it is necessary to send settlement information from the reader terminal to the bank or other financial institution issuing the debit card, so the debit card settlement information processing system 5' is connected to the mobile unit packet communications network 4' by the dedicated line DL' and is connected to the network to which the computer systems of the financial institutions 6-1', 6-2', ..., 6-n' are connected.

In such a configuration, packet communications registration the same as in the above embodiment, processing for connection to the debit card settlement information processing system 5', processing for verification of the reader terminal 1a' are performed. Further, the reader terminal 1a' can transfer information with the financial institutions through the satellite and ground mobile communications network in the same way as the card reader terminal 1a with respect to credit card companies in the above embodiment, so processing of settlement by debit card becomes possible even in mountain lodges, in ocean liners during voyages, where ground waves cannot reach.

### (4) Location of Use

In the above embodiment, mention was made of a mountain lodge and an ocean liner during a voyage as locations for provision of the card settlement service, but the invention is not limited to these locations. The card settlement service can be provided in the same way even in other areas where ground waves do not reach and installation of a telephone line would be difficult such as in mountainous regions or on the sea or in the air (normally areas considered outside ground networks such as mobile communications networks or fixed communications networks). For example, in an airplane during flight, while charges are being settled by card even now, the card reader terminals are not being verified in the settlement processing. As opposed to this, according to the above card settlement processing system for credit cards, debit cards, it is possible to provide card settlement services accompanied with verification of the card reader terminals even in an airplane during flight.

Summarizing the effects of the invention, as explained above, according to the present invention, information relating to the settlement processing of a sales transaction is transmitted to the communications network through a satellite and is processed by a settlement unit of the sales transaction connected to the communications network, so it is possible to electronically process, by the transfer of information through the communications network, even settlements of sales transaction performed outside a mobile communications network or fixed communications network or other ground network. Due to this, it is possible to provide electronic settlement services even in a mountainous region, on the sea, in the air, or in other areas outside ground networks where ground waves do not reach and where installation of a telephone line would be difficult. There are therefore the advantageous effects that the trouble in settlement in such areas is eliminated and the convenience of sales transactions is improved.

Here, to transmit the information relating to settlement processing, it is possible to use an input device for the transmitted information and a satellite communications device having an interface able to transfer information with the input device. In this case, if a satellite communications portable mobile unit transferring information through the interface at a communications speed commensurate with the input device is used as the satellite communications device, it is possible to configure the input device by using an existing card reader terminal in general use.

Further, if the transmitter of the information relating to the settlement processing using this input device and satellite communications device starts an operation for establishing connection with the settlement unit through the satellite and communications network upon the input of a predetermined instruction by the operator, a certain amount of time for connection processing is taken since a satellite is gone through, so it is also possible to input other information in parallel during this connection processing time. By doing this, it is possible to achieve a state where transmission is possible immediately upon establishment of connection at the time when the required information has finished being input and possible to efficiently and quickly perform the operation required at the location of the sales transaction.

While the invention has been described with reference to specific embodiments chosen for purpose of illustration, it should be apparent that numerous modifications could be made thereto by those skilled in the art without departing from the basic concept and scope of the invention.

## Claims

1. A settlement processing method comprising:
transmitting information relating to a sales transaction by a transmitter;
receiving the information from the transmitter by a satellite;
transmitting the received information by the satellite;
receiving the information from the satellite by a communications network;
receiving the information from the satellite through the communications network by a settlement unit; and
processing a settlement of sales transaction based on the received information by the settlement unit.

2. A settlement processing system comprising:
a transmitter for transmitting information relating to a sales transaction;
a satellite for receiving and transmitting the information from the transmitter;
a communications network for receiving information transmitted from said satellite; and
a settlement unit connected to said communications network, receiving the information transmitted from said transmitter through said satellite and said communications network, and processing the settlement of the sales transaction based on the received information.

3. A settlement processing system as set forth in claim 2, wherein said transmitter is provided with:
an input device for inputting information relating to settlement processing of the sales transaction; and
a satellite communications device having an interface able to transfer information with said input device and communicating with said satellite.

4. A settlement processing system as set forth in claim 3, wherein said satellite communications device transfers information with said input device through said interface at a communications speed commensurate with said input device.

5. A settlement processing system as set forth in claim 3, wherein said satellite communications device is a portable mobile unit for satellite communications.

6. A settlement processing system as set forth in claim 3, wherein
said transmitter starts a connection operation with said settlement unit through said satellite and said communications network upon the input of a predetermined instruction by an operator of the input device and transmits information relating to the settlement processing of said sales transaction by a transmitting operation by an operator performed after the input of said instruction.

7. A settlement processing system as set forth in claim 3, wherein said settlement unit verifies said input device.
